# EUROPEAN PATENT APPLICATION

(11) **EP 4 322 278 A1**
(43) Date of publication of application: **14.02.2024**
(21) Application number: 23155514.5
(22) Date of filing: 08.02.2023
(51) Int. Cl.: H01M 10/0567, H01M 10/0525, H01M 4/58, H01M 4/525, H01M 4/587, H01M 10/0568, H01M 10/0569

(54) **ELECTROLYTE AND LITHIUM-ION BATTERY INCLUDING THE SAME**

(30) Priority: 10.08.2022 CN 202210956938
(71) Applicant: CALB Co., Ltd., Changzhou City, Jiangsu Province (CN)
(72) Inventor: LI, Kui, Changzhou City, Jiangsu Province (CN); TIAN, Yuanyuan, Changzhou City, Jiangsu Province (CN); WANG, Juan, Changzhou City, Jiangsu Province (CN)
(74) Representative: Becker, Eberhard

(57) **Abstract**

The invention discloses an electrolyte solution containing lithium salt, an organic solvent, and additives. The additives include vinylene carbonate and 2,6-di-tert-butyl-4-methylphenol; the content of vinylene carbonate accounts for 0.5% to 5% of the total mass of the electrolyte, and the content of 2,6-di-tert-butyl-4-methylphenol accounts for 7^{∗}10⁻⁴% to 1.6% of the total mass of vinylene carbonate. The electrolyte of the invention can improve the film formation rate and film thickness of vinylene carbonate in the negative electrode, so that the obtained SEI film resistance is smaller, thereby improving the performance of the lithium battery.

## Description

### BACKGROUND

### Technical Field

The invention relates to the field of lithium-ion batteries, and particularly, to an electrolyte and a lithium-ion battery including the same.

### Description of Related Art

Lithium-ion batteries are mainly composed of four key parts: a positive electrode piece, a negative electrode piece, an electrolyte, and a separator. A discharge process of a lithium-ion battery is as follows. Lithium ions are extracted from the positive electrode, pass through the solid electrolyte interface (SEI) membrane into the electrolyte, and are transported to the surface of the negative electrode by diffusion in the electrolyte. Finally, the lithium intercalation process is implemented by intercalating the positive electrode material, discharge is implemented, and charging is opposite to the discharging process. The smooth transport of lithium ions from the positive electrode to the negative electrode is the key, so the electrolyte as a carrier for transporting lithium-ions becomes a key effect on the performance of lithium-ion batteries.

The electrolyte is mainly composed of solvent, lithium salt, and additives. The solvent is mainly used as a carrier for transporting lithium ions and solvating the electrolyte salt to ensure the transport of lithium ions; lithium salt is the provider of lithium ions, which affects the rate and cyclability of the battery; additives are the most economical and efficient way to improve battery performance. Because a small amount is added (usually the concentration does not exceed 5%), the cost of the battery is hardly increased, but the function of the electrolyte can be improved and the performance of the battery is significantly improved. It would be more economical and convenient if some improvements in battery performance could be implemented by adding a small amount of components to the electrolyte without replacing its framework components.

During the first charging process, the electrolyte is reduced on the surface of the negative electrode to form a passivation film, that is, the SEI film. The SEI film on the negative electrode surface largely determines the behavior and performance of electrodes and batteries, such as cycle life, shelf life, safety, and irreversible capacity loss. The main function of the SEI film is to isolate the negative electrode from the electrolyte, reducing the migration of electrons from the electrode to the electrolyte, and the migration of solvent molecules and salt anions from the electrolyte to the electrode.

The SEI film near the negative electrode material is a dense inorganic layer, and the one near the electrolyte is a porous organic layer. The composition of the SEI film is very complex, in which the inorganic component is the decomposition product of the electrolyte salt, and the organic component is the reduction product of the solvent. The thickness of the SEI film ranges from a few angstroms to hundreds of angstroms. Some components in the SEI film are partially soluble in the electrolyte, so it is difficult to measure the thickness of the SEI film. However, since it can improve the interface impedance as a new phase between the active material and the electrolyte, electrochemical impedance spectroscopy can be used to measure the average thickness of the SEI film.

The SEI film is composed of the decomposition products of the electrolyte, this means that the properties of the SEI depend on the composition of the electrolyte, and the types of electrochemical reactions involved in the reduction of the electrolyte into the film are also very complex and diverse. The final SEI film is a variety of results of cross-competition reactions.

The selection of suitable electrolyte solvents and additives not only contributes to generating stable SEI films in the first cycle but also plays a favorable role in the growth of SEI films during long-term cycling and shelving. A stable SEI film may generate less irreversible capacity, reducing the decay of the SEI film itself.

SEI film-forming additives can preferentially undergo redox reactions on the electrode surface and promote the formation of dense and stable SEI films. Therefore, it is necessary to select appropriate SEI film-forming additives. Vinylene carbonate (VC) is a classic film-forming additive, and the reactivity of VC comes from its polymerizable vinyl functionality and high-strain structure, which is caused by sp2-hybridized carbon atoms on the ring.

### SUMMARY

In an electrolyte, vinylene carbonate (VC), which is mainly used as a film-forming additive for a negative electrode, decomposes preferentially on a surface of the negative electrode before the electrolyte to form a polymer protective film. However, the inventors of the present application found that the film formation rate and film thickness of VC on the negative electrode surface are difficult to control, resulting in unstable quality of the final lithium-ion battery.

To solve the problems, on the one hand, the present application provides an electrolyte solution containing lithium salt, an organic solvent, and additives. The additives include vinylene carbonate and 2,6-di-tert-butyl-4-methylphenol; the content of vinylene carbonate accounts for 0.5% to 5% of the total mass of the electrolyte, and the content of 2,6-di-tert-butyl-4-methylphenol accounts for 7^{∗}10⁻⁴% to 1.6% of the total mass of vinylene carbonate.

Adding a small amount of 2,6-di-tert-butyl-4-methylphenol (BHT) to the electrolyte can control the amount of VC polymerization, so as to control the VC film formation rate and film thickness. Moreover, when the content of BHT is less than 7^{∗}10⁻⁴% of the total mass of vinylene carbonate, VC may polymerize itself. When VC is added to the electrolyte, VC itself has already polymerized, and it cannot be used in the subsequent SEI formation. When the BHT content is greater than 1.6% of the total mass of VC, BHT has a greater inhibitory effect on VC. Although VC itself polymerizes less, it also affects the polymerization reaction of VC on the surface of the negative electrode, resulting in a slow rate of VC participating in the film-forming polymerization, and a too thin formed SEI film. In addition, the SEI film is formed on the surface of the negative electrode particles, and in the subsequent cycle process, the SEI film may be continuously repaired, and the BHT properties are stable. In the battery system, it does not react with other chemical substances and can continue to participate in the formation and SEI repair process and regulate the SEI film formation rate and film formation effect. Moreover, the negative electrode piece includes an active material layer, the active material layer contains negative electrode particles, and the electrolyte containing VC may permeate into the active material layer to form an SEI film on the exposed surface of the negative electrode particles. The molecular weight of BHT is moderate, which is 220.36. If other additives with larger molecular weight are selected, they cannot permeate the active material layer with VC and regulate the film formation of VC on the surface of negative electrode particles.

In another aspect, the invention provides a lithium-ion battery including the electrolyte of the invention. With little increase in production cost, the lithium-ion battery of the invention has better cycle life and safety, less irreversible capacity loss, and the like.

### BRIEF DESCRIPTION OF THE DRAWING

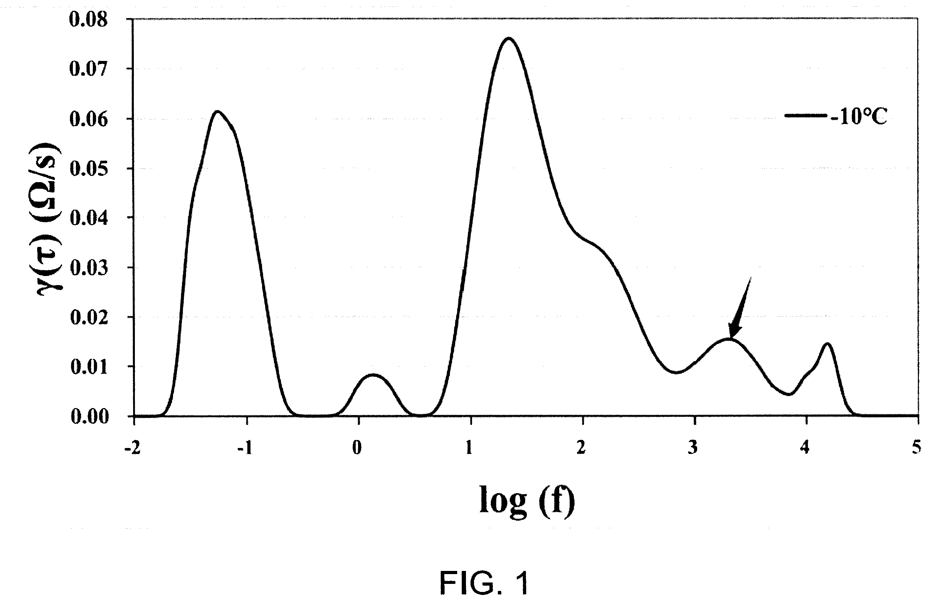

Figure 1 is a DRT spectrum of a sample test of a third embodiment of the present application.

### DESCRIPTION OF THE EMBODIMENTS

For better understanding and implementation, the technical solutions of the invention are about to be clearly and completely described below with reference to the embodiments.

Unless otherwise defined, all technical and scientific terms used herein have the same meaning as commonly understood by those skilled in the art to which this invention belongs. The terms used herein in the specification of the invention are for describing specific embodiments only and are not intended to limit the invention.

Unless otherwise illustrated, all numerical values used in the specification and claims to express amounts of ingredients, reaction conditions, etc. are interpreted to be modified by the term "about". Accordingly, unless indicated to the contrary, the numerical parameters set forth herein are approximates that can vary depending upon the desired properties sought to be obtained.

As used herein, "and/or" refers to one or all of the referred elements.

As used herein, "comprising" and "containing" encompass only the recited element as well as instances where there are other unrecited elements in addition to the recited element.

All percentages in the invention are weight percentages unless otherwise illustrated.

As used in this specification, "a", "a kind", "an" and "the" are intended to include "at least one" or "one or more" unless otherwise illustrated. For example, "a component" refers to one or more components, thus more than one component may be contemplated and may be adopted or used in the implementation of the described embodiments.

The electrolyte of the invention includes lithium salt, organic solvent and additives, and the additives include vinylene carbonate (VC) and 2,6-di-tert-butyl-4-methylphenol (BHT). The content of vinylene carbonate accounts for 0.5% to 5% of the total mass of the electrolyte, and the content of 2,6-di-tert-butyl-4-methylphenol accounts for 7^{∗}10 -4% to 1.6% of the total mass of vinylene carbonate.

In the electrolyte, the main role of VC is as film-forming additive for a negative electrode, mainly relying on the decomposition of VC on the negative electrode surface prior to the electrolyte solution to form a polymer protective film. Due to the excellent film-forming ability of the VC additive, the coulombic efficiency and charge capacity retention rate of the battery can be improved. However, as mentioned, the inventors of the present application found that the film formation rate and film thickness of VC on the electrode piece are difficult to control due to the influence of many factors in actual production, which may lead to unstable performance of lithium-ion batteries.

BHT is a commonly used antioxidant, but on the basis of using VC as an electrolyte additive, the inventors of the present application further add a small amount of BHT component to control the film formation rate and film thickness of VC on the electrode piece, so that the impedance of the lithium-ion battery is reduced and the cycle performance is improved.

As a further improvement, the content of 2,6-di-tert-butyl-4-methylphenol accounts for 7^{∗}10⁻⁴% to 1.6^{∗}10⁻²% of the total mass of vinylene carbonate.

As a further improvement, the lithium salt is selected from one or more of LiPF₆, LiBF₄, LiAsF₆, LiClO₄, LiBOB, LiODFB, LiCF₃SO₃, LiN(SO₂CF₃)₂, LiN(SO₂C₂F₅)₂, LiC(SO₂CF₃)₃, LiN(SO₃CF₃)₂, and LiI. Considering factors, such as the stability, conductivity, cost and safety of various lithium salt, LiPF₆ is still the most widely used lithium salt with the best comprehensive performance. In one embodiment, the concentration of the lithium salt may be 0.5-2 mol/L.

As a further improvement, the organic solvent is selected from at least one of cyclic carbonate compounds, chain carbonate compounds, ether compounds and carboxylate compounds. Furthermore, the organic solvent is selected from at least two of vinylene carbonate, propylene carbonate, butylene carbonate, fluoroethylene carbonate, dimethyl carbonate, diethyl carbonate, dipropyl carbonate, ethyl methyl carbonate, propyl methyl carbonate, ethyl propyl carbonate, 1,4-butyrolactone, methyl propionate, methyl butyrate, ethyl acetate, propyl propionate, ethyl propionate and ethyl butyrate. The organic solvent is mainly used as a carrier for transporting lithium ions and solvates the electrolyte salt to ensure the transport of lithium ions.

The lithium-ion battery of the invention, in addition to the foregoing electrolyte, also includes a positive electrode piece containing an active material of the positive electrode, and the active material of the positive electrode includes lithium iron phosphate. That is, the electrolyte of the invention can be adapted for lithium iron phosphate batteries.

As a further improvement, when it is adapted for lithium iron phosphate batteries, in the electrolyte of the invention, VC accounts for 2%-5% of the total mass of the electrolyte. For lithium iron phosphate batteries, when the addition of VC is increased from 0.5%-2% to 2%-5%, a thicker SEI film of more than 100 nm may be formed, which makes the normal temperature cycle life of lithium iron phosphate/graphite battery products to be improved more greatly.

The lithium-ion battery of the invention, in addition to the electrolyte, also includes a positive electrode piece containing an active material of the positive electrode, and the active material of the positive electrode includes lithium cobalt oxide, lithium manganate and/or lithium nickel manganese cobalt ternary material. That is, the electrolyte of the invention can be applied to lithium cobaltate, lithium manganate, or ternary lithium batteries. For lithium cobaltate, lithium manganate or ternary lithium battery, in the electrolyte of the invention, VC accounts for 0.5%-1% of the total mass of the electrolyte. For lithium cobalt oxide, lithium manganate or ternary lithium battery, when the addition amount of VC is kept at 0.5% to 1%, the obtained SEI film has lower impedance.

The lithium-ion battery of the invention, in addition to the electrolyte, also includes a negative electrode piece containing an active material of the negative electrode and a separator; the active material of the negative electrode is selected from one or more of graphite, artificial graphite, mesocarbon microspheres, hard carbon, soft carbon, silicon, silicon-carbon composites, Li-Sn alloys, Li-Sn-O alloys, Sn, SnO, SnO₂, lithiated TiO2-Li₄Ti₅O₁₂, and Li-Al alloys with spinel structure.

Electrochemical impedance spectroscopy (EIS) is to measure the electrochemical system under a series of small-amplitude perturbation signals of different frequencies, so as to obtain the relationship between the electrochemical impedance and the frequency of the perturbation signal.

The main process of the EIS method is to apply a small amplitude sinusoidal alternating disturbance signal (alternating voltage or alternating current) to the research system under a certain potential or current, collect the corresponding current (or potential) response signal, and finally obtain the impedance spectrum of the system or admittance spectrum. Then, the impedance spectrum or admittance spectrum is analyzed and fitted according to the mathematical model or equivalent circuit model to obtain the electrochemical information inside the system. EIS can measure impedance over a wide frequency range, so it is possible to obtain more kinetic information about the system under test than other conventional electrochemical methods. The average thickness of the SEI film can be measured by electrochemical impedance spectroscopy.

### Embodiment 1

(1) In preparation of positive electrode piece, the active materials of the positive electrode of LiNi₆Co₂Mn₂O₂, the conductive agent acetylene black, and the binder PVDF were mixed in a mass ratio of 96:2:2, the solvent NMP was added, and the mixture was stirred by a vacuum mixer until the system was homogeneous to obtain positive electrode slurry. The positive electrode slurry was uniformly coated on both surfaces of the positive electrode current collector aluminum foil, dried at room temperature, then transferred to an oven for further drying, and then cold-pressed and cut to obtain positive electrode pieces.
(2) In preparation of negative electrode piece, the active material of the negative electrode of graphite, conductive agent acetylene black, thickener CMC, and binder SBR were mixed in a mass ratio of 96.4:1:1.2:1.4, the solvent deionized water was added, and the mixture is stirred by a vacuum mixer until the system was homogeneous to obtain a negative electrode slurry. The negative electrode slurry was evenly coated on both surfaces of the negative electrode current collector copper foil, dried at room temperature, transferred to an oven for further drying, and then cold-pressed and cut to obtain a negative electrode piece.
(3) In preparation of isolation film: polyethylene film was selected as the isolation film.
(4) In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.35ppm of BHT were added according to 0.5% of the total weight of the electrolyte, that is, BHT accounts for 7^{∗}10⁻³% of VC.
   The purification of vinylene carbonate includes the following steps. Under the action of protective gas, the crude vinylene carbonate is subject to falling film crystallization and temperature increase to obtain crystals; then after the obtained crystal is heated and melted, a liquid is obtained; finally, after the obtained liquid is rectified, purified vinylene carbonate is obtained (the BHT content in the purified vinylene carbonate is detected by gas chromatography, and the BHT content in the vinylene carbonate VC is lower than the detection limit of gas chromatography, which can be ignored depending on the BHT content in VC).
(5) In preparation of lithium-ion battery, the positive electrode piece, separator, and negative electrode piece are stacked in sequence, so that the separator is disposed between the positive electrode piece and the negative electrode piece to play the role of isolation. Then, a bare cell is obtained by winding; the bare cell is disposed in an outer packaging case, dried and then injected into an electrolyte, and a lithium-ion battery is obtained through the processes of vacuum packaging, standing, forming, shaping, and the like.

### Embodiment 2

The preparation of the positive electrode piece, the negative electrode piece, the separator, and the lithium-ion battery in Embodiment 2 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.8ppm of BHT were added according to 0.5% of the total weight of the electrolyte, that is, BHT accounts for 1.6^{∗}10⁻²% of the total mass of VC.

### Embodiment 3

The preparation of the positive electrode piece, the negative electrode piece, the separator, and the lithium-ion battery in Embodiment 3 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1 :1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 80ppm of BHT were added according to 0.5% of the total weight of the electrolyte, that is, BHT accounts for 1.6% of the total mass of VC.

### Embodiment 4

The preparation of the positive electrode piece, the negative electrode piece, the separator, and the lithium-ion battery in Embodiment 4 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.45ppm of BHT were added according to 1 % of the total weight of the electrolyte, that is, BHT accounted for 0.0045% of the total mass of VC.

### Embodiment 5

The preparation of the positive electrode piece, the negative electrode piece, the separator, and the lithium-ion battery in Embodiment 5 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 1.5ppm of BHT were added according to 1% of the total weight of the electrolyte, that is, BHT accounts for 1.5^{∗}10⁻²% of the total mass of VC.

### Embodiment 6

The preparation of the positive electrode piece, the negative electrode piece, the separator, and the lithium-ion battery in Embodiment 6 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 80ppm of BHT were added according to 1% of the total weight of the electrolyte, that is, BHT accounts for 0.8% of the total mass of VC.

### Embodiment 7

The preparation of the negative electrode piece, the separator, and the lithium-ion battery in Embodiment 7 is the same as those of Embodiment 1, and the purification of vinylene carbonate is also the same as that of Embodiment 1.
(1) In preparation of positive electrode piece, the active materials of the positive electrode of lithium iron phosphate, the conductive agent acetylene black, and the binder PVDF were mixed in a mass ratio of 96:2:2, the solvent NMP was added, and the mixture was stirred by a vacuum mixer until the system was homogeneous to obtain positive electrode slurry. The positive electrode slurry was uniformly coated on both surfaces of the positive electrode current collector aluminum foil, dried at room temperature, then transferred to an oven for further drying, and then cold-pressed and cut to obtain positive electrode pieces.
(2) In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.35ppm of BHT were added according to 2% of the total weight of the electrolyte, that is, BHT accounts for 0.00175% of the total mass of VC.

### Embodiment 8

The preparation of the positive electrode piece in Embodiment 8 is the same as that of Embodiment 7, the preparation of the negative electrode piece, the separator, and the lithium-ion battery is the same as those of Embodiment 1, and the purification of vinylene carbonate is also the same as that of Embodiment 1.

Ethylene carbonate (EC), ethyl methyl carbonate (EMC), and diethyl carbonate (DEC) were mixed in a volume ratio of 1:1 :1 to obtain an organic solvent, then the fully dried lithium salt LiPF6 was dissolved in the mixed organic solvent to prepare an electrolyte with a concentration of 1 mol/L, and then vinylene carbonate (VC) after multiple purification and 3.2ppm of BHT were added according to 2% of the total weight of the electrolyte, that is, BHT accounts for 1.6^{∗}10⁻²% of the total mass of VC.

### Embodiment 9

The preparation of the positive electrode piece in Embodiment 9 is the same as that of Embodiment 7, the preparation of the negative electrode piece, the separator, and the lithium-ion battery is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 80ppm of BHT were added according to 2% of the total weight of the electrolyte, that is, BHT accounts for 0.4% of the total mass of VC.

### Embodiment 10

The preparation of the positive electrode piece in Embodiment 10 is the same as that of Embodiment 7, the preparation of the negative electrode piece, the separator, and the lithium-ion battery is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.35ppm of BHT were added according to 5% of the total weight of the electrolyte, that is, BHT accounts for 7^{∗}10⁻⁴% of the total mass of VC.

### Embodiment 11

The preparation of the positive electrode piece in Embodiment 11 is the same as that of Embodiment 7, the preparation of the negative electrode piece, the separator, and the lithium-ion battery is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 40ppm of BHT were added according to 5% of the total weight of the electrolyte, that is, BHT accounts for 0.08% of the total mass of VC.

### Embodiment 12

The preparation of the positive electrode piece in Embodiment 12 is the same as that of Embodiment 7, the preparation of the negative electrode piece, the separator, and the lithium-ion battery is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 80ppm of BHT were added according to 5% of the total weight of the electrolyte, that is, BHT accounts for 0.16% of the total mass of VC.

### Comparative example 1

The preparation of the positive electrode piece, the negative electrode piece, the separator, and the lithium-ion battery in Comparative example 1 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 0.14ppm of BHT were added according to 0.5% of the total weight of the electrolyte, that is, BHT accounts for 6^{∗}10⁻⁴% of the total mass of VC; and the final BHT content accounts for 6%^{∗}10⁻⁴% of VC.

### Comparative example 2

The preparation of the positive electrode piece, the negative electrode piece, the separator, and the lithium-ion battery in Comparative example 2 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 100ppm of BHT were added according to 0.5% of the total weight of the electrolyte, that is, BHT accounts for 2% of the total mass of VC.

### Comparative example 3

The preparation of the positive electrode piece in Comparative example 3 is the same as that of Embodiment 7, the preparation of the negative electrode piece, the separator, and the lithium-ion battery is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then vinylene carbonate (VC) after multiple purification and 200ppm of BHT were added according to 2% of the total weight of the electrolyte, that is, BHT accounts for 1% of the total mass of VC.

### Comparative example 4

The preparation of the positive electrode piece, the negative electrode piece, the separator, and the lithium-ion battery in Comparative example 4 is the same as those of Embodiment 1, and the purification of vinylene carbonate is also the same as that of Embodiment 1.

In preparation of electrolyte: ethylene carbonate (EC), ethyl methyl carbonate (EMC), and diethyl carbonate (DEC) were mixed in a volume ratio of 1:1:1 to obtain an organic solvent, then the fully dried lithium salt LiPF₆ was dissolved in the mixed organic solvent to prepare an electrolyte with a concentration of 1 mol/L, and then purified vinylene carbonate (VC) and 6ppm of 1.1-diphenyl-2-picrohydrazino (DPPH, molecular weight 394.32) were added according to 0.5% of the total weight of the electrolyte, that is, DPPH accounts for 0.12% of the total mass of VC.

### Test on performance

### (1) Negative impedance test

By an electrochemical workstation, electrochemical impedance (EIS) tests were performed on the batteries at -10 °C and 50% SOC, and then DRT was used to process the data to obtain the SEI film resistance.

Regarding peak splitting based on DRT technology, in an example of Embodiment 3, as shown in Figure 1, there are 6 peaks in the DRT spectrum, and P5 is Rsei (SEI film impedance) (indicated by the arrow in Figure 1); after data processing, Rsei=11.20 mΩ is obtained.

The remaining Embodiments 1-2, 4-12 and Comparative examples 1-4 were subject to data analysis according to the same method, and the Rsei values of each of the Embodiments and Comparative examples were obtained, as shown in Table 1 for details.

**Table 1: SEI film impedance for each embodiment**

| **Sample** | **Active material of the positive electrode** | **VC additive content (Based on the total mass of electrolyte)** | **The content of BHT in the total mass of VC** | **resistance of the SEI film mΩ** |
|---|---|---|---|---|
| Embodiment 1 | LiNi₆Co₂Mn₂O₂ | 0.5% | 7^{∗}10⁻³% | 10.99 |
| Embodiment 2 | LiNi₆Co₂Mn₂O₂ | 0.5% | 1.6^{∗}10⁻²% | 10.62 |
| Embodiment 3 | LiNi₆Co₂Mn₂O₂ | 0.5% | 1.6% | 11.20 |
| Embodiment 4 | LiNi₆Co₂Mn₂O₂ | 1% | 4.5^{∗}10⁻³% | 10.98 |
| Embodiment 5 | LiNi₆Co₂Mn₂O₂ | 1% | 1.5^{∗}10⁻²% | 10.88 |
| Embodiment 6 | LiNi₆Co₂Mn₂O₂ | 1% | 0.8% | 11.15 |
| Embodiment 7 | Lithium iron phosphate | 2% | 0.00175% | 11.01 |
| Embodiment 8 | Lithium iron phosphate | 2% | 1.6^{∗}10⁻²% | 10.80 |
| Embodiment 9 | Lithium iron phosphate | 2% | 0.4% | 11.20 |
| Embodiment 10 | Lithium iron phosphate | 5% | 7^{∗}10⁻⁴% | 10.98 |
| Embodiment 11 | Lithium iron phosphate | 5% | 0.08% | 11.10 |
| Embodiment 12 | Lithium iron phosphate | 5% | 0.16% | 11 . 13 |
| Comparative example 1 | LiNi₆Co₂Mn₂O₂ | 0.5% | 6^{∗}10⁻⁴% | 11.86 |
| Comparative example 2 | LiNi₆Co₂Mn₂O₂ | 0.5% | 2% | 11.92 |
| Comparative example 3 | Lithium iron phosphate | 2% | 1% | 12.02 |
| Comparative example 4 | LiNi₆Co₂Mn₂O₂ | 0.5% | 0.12% | 12.20 |

With reference to Embodiments 1 to 12 and Comparative example 1, it can be seen that when the content of BHT in the total mass of VC is less than 7^{∗}10⁻⁴%, the resistance of the SEI film increases. This is mainly because when the content of BHT in the total mass of VC is less than 7^{∗}10⁻⁴%, VC tends to undergo its own polymerization, and when VC is added to the electrolyte, the VC itself has already polymerized and cannot play a role in the subsequent SEI film formation, resulting in poor SEI film effect and an increase of resistance. With reference to Embodiments 1 to 12 and Comparative examples 2 and 3, it can be seen that when the content of BHT in the total mass of VC is greater than 1.6%, the resistance of SEI film may also increase. This is mainly because when the BHT content is greater than 1.6%, BHT has a greater inhibitory effect on VC, and although VC itself polymerizes less, it also affects the polymerization reaction of VC on the surface of the negative electrode, resulting in a slow rate of VC participating in film-forming polymerization and a larger resistance. In addition, the formed SEI film is too thin, resulting in some of the negative electrode material being consumed by the electrolyte.

In addition, with reference to Comparative example 4, it can be seen that although DPPH is also a commonly used polymerization inhibitor, it cannot play a good role in regulating SEI, and the SEI film still exhibits a large resistance.

## Claims

1. A lithium-ion battery, comprising a positive electrode piece containing an active material of a positive electrode, wherein the active material of the positive electrode comprises a lithium nickel manganese cobalt ternary material and an electrolyte, the electrolyte comprises lithium salt, an organic solvent, and additives, the additives comprise vinylene carbonate and 2,6-di-tert-butyl-4-methylphenol; wherein a content of the vinylene carbonate accounts for 0.5% to 1% of a total mass of the electrolyte, and a content of the 2,6-di-tert-butyl-4-methylphenol accounts for 7^{∗}10⁻⁴% to 1.6% of a total mass of the vinylene carbonate;
the organic solvent is selected from at least one of cyclic carbonate compounds, chain carbonate compounds, ether compounds, and carboxylate compounds.

2. The lithium-ion battery according to claim 1, wherein the content of 2,6-di-tert-butyl-4-methylphenol accounts for 7^{∗}10⁻⁴% to 1.6^{∗}10⁻²% of the total mass of vinylene carbonate.

3. The lithium-ion battery according to claim 1, wherein the lithium salt is selected from one or more of LiPF₆, LiBF₄, LiAsF₆, LiClOₐ, LiBOB, LiODFB, LiCF₃SO₃, LiN (SO₂CF₃)₂, LiN (SO₂C₂F₅)₂, LiC (SO₂CF₃)₃, LiN(SO₃CF₃)₂ and LiI.

4. A lithium-ion battery, comprising a positive electrode piece containing an active material of a positive electrode, wherein the active material of the positive electrode comprises lithium iron phosphate and an electrolyte, the electrolyte comprises lithium salt, an organic solvent and additives, and the additives comprises vinylene carbonate and 2,6-di-tert-butyl-4-methylphenol; wherein a content of the vinylene carbonate accounts for 2% to 5% of a total mass of the electrolyte, and a content of the 2,6-di-tert-butyl-4-methylphenol accounts for 7^{∗}10⁻⁴% to 1.6% of a total mass of the vinylene carbonate.;
the organic solvent is selected from at least one of cyclic carbonate compounds, chain carbonate compounds, ether compounds, and carboxylate compounds.

5. The lithium-ion battery according to any one of claims 1 to 4, wherein the lithium-ion battery further comprises a negative electrode piece containing an active material of a negative electrode and a separator; the active material of the negative electrode is selected from one or more of graphite, artificial graphite, mesocarbon microspheres, hard carbon, soft carbon, silicon, silicon-carbon composites, Li-Sn alloys, Li-Sn-O alloys, Sn, SnO, SnO₂, lithiated TiO₂-Li₄Ti₅O₁₂, and Li-Al alloys with spinel structure.
